(19) Europäisches Patentamt
European Patent Office
Office européen des brevets

(11) **EP 3 270 444 B1**

(12) **EUROPEAN PATENT SPECIFICATION**

(45) Date of publication and mention
of the grant of the patent:
**03.07.2019 Bulletin 2019/27**

(51) Int Cl.:
*H01M 4/38* (2006.01)     *B22F 1/00* (2006.01)
*B22F 5/00* (2006.01)     *C22C 19/00* (2006.01)
*H01M 4/24* (2006.01)     *H01M 10/30* (2006.01)

(21) Application number: **16761490.8**

(22) Date of filing: **24.02.2016**

(86) International application number:
**PCT/JP2016/055451**

(87) International publication number:
**WO 2016/143519 (15.09.2016 Gazette 2016/37)**

(54) **HYDROGEN STORAGE ALLOY POWDER AND NICKEL HYDROGEN SECONDARY BATTERY USING THIS HYDROGEN STORAGE ALLOY POWDER**

WASSERSTOFFSPEICHERLEGIERUNGSPULVER UND NICKEL-WASSERSTOFF-SEKUNDÄRBATTERIE MIT DIESEM WASSERSTOFFSPEICHERLEGIERUNGSPULVER

POUDRE D'ALLIAGE DE STOCKAGE D'HYDROGÈNE ET PILE RECHARGEABLE NICKEL-HYDROGÈNE UTILISANT LADITE POUDRE D'ALLIAGE DE STOCKAGE D'HYDROGÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.03.2015 JP 2015048305**

(43) Date of publication of application:
**17.01.2018 Bulletin 2018/03**

(73) Proprietor: **FDK Corporation**
**Tokyo 108-8212 (JP)**

(72) Inventors:
• **KIHARA, Masaru**
  **Tokyo 108-8212 (JP)**
• **SAGUCHI, Akira**
  **Tokyo 108-8212 (JP)**
• **SHINGAI, Yusuke**
  **Tokyo 108-8212 (JP)**
• **ISHIDA, Jun**
  **Tokyo 108-8212 (JP)**
• **KAI, Takuya**
  **Tokyo 108-8212 (JP)**
• **KAJIWARA, Takeshi**
  **Tokyo 108-8212 (JP)**

(74) Representative: **Epping - Hermann - Fischer Patentanwaltsgesellschaft mbH Schloßschmidstraße 5 80639 München (DE)**

(56) References cited:
EP-A1- 2 690 690     WO-A1-2014/118846
JP-A- H0 837 004     JP-A- 2000 277 096
JP-A- 2014 026 844     JP-A- 2014 089 879
US-A1- 2007 158 001

## Description

### Technical Field

The present invention relates to a hydrogen absorbing alloy powder, and a nickel hydrogen secondary battery using the hydrogen absorbing alloy powder.

### Background Art

Nickel hydrogen secondary batteries have been used in various applications including various types of portable devices and hybrid electric cars because the nickel hydrogen secondary batteries are higher in the capacity and better in the environmental safety as well than nickel cadmium secondary batteries.

Here, since usual nickel hydrogen secondary batteries have a high capacity but have a large self-discharge, the residual capacity reduces when the standing period is long, and the need of charging just before their use often arises.

Then, many studies have been made aiming at improving the self-discharge characteristics of nickel hydrogen secondary batteries, and various types of nickel hydrogen secondary batteries of self-discharge suppression type have been developed (for example, see Patent Literature 1).

Such nickel hydrogen secondary batteries of self-discharge suppression type have such a merit that the incidence of the situation needing the recharge just before their use is decreased, since when such batteries are charged in advance by users, the amount of decrease in the residual capacity is small even after the batteries are left standing. By making the best use of such a merit, the nickel hydrogen secondary batteries of self-discharge suppression type become excellent batteries having good usability like dry batteries and a high capacity equal to or higher than that of dry batteries in combination. Patent Document 2 discloses discloses a nickel-metal hydride secondary cell comprising a container, and an electrode group hermetically contained in the container together with an alkaline electrolyte solution, the electrode group including a separator, a negative electrode and a positive electrode, characterized in that the negative electrode contains a hydrogen absorbing alloy having a composition represented by a general formula: $(RE_{1-x}T_x)_{1-y}Mg_yNi_{z-a}Al_a$ (where RE is at least one element selected from among Y, Sc and rare-earth elements, T is at least one element selected from among Zr, V and Ca, and subscripts x, y, z and a are values respectively satisfying $0 \leq x$, $0.05 \leq y \leq 0.35$, $2.8 \leq z \leq 3.9$, and $0.10 \leq a \leq 0.25$), the hydrogen absorbing alloy has a crystal structure in which an AB2 subunit and an AB5 subunit are superimposed one upon the other, and Cr is substituted for part of the Ni.

### Prior Art Documents

### Patent Documents

Patent Document 1: Japanese Patent Laid-Open No. 62-115657

Patent Document 2: EP 2690690 A1

### Summary of the Invention

### Problems to be solved by the Invention

It has been confirmed for the conventional nickel hydrogen secondary batteries of self-discharge suppression type that a phenomena occurs such that a voltage (operation voltage) during discharge decreases in spite of full recovery of battery capacity when a battery is charged and recovered again after it has been discharged in use after left standing over a long period of time. When such a battery is used for devices (digital cameras, electric shavers and the like) requiring predetermined relatively high operation voltages, since the operation voltage become lower than the predetermined voltage in spite of that the battery capacity remain sufficient, such a trouble that these devices cannot be driven occurs. When a decrease in the operation voltage thus occurs, the capacity of the battery cannot be used up sufficiently, and the capacity to be extracted from the battery and utilized eventually becomes low. Hence, the development of a nickel hydrogen secondary battery of self-discharge suppression type which can suppress the decrease in operation voltage after the recovery is demanded.

The present invention has been achieved based on the above-mentioned situation, and an object of the present invention is to provide a hydrogen absorbing alloy powder to become a negative electrode material of a nickel hydrogen secondary battery capable of suppressing a decrease in operation voltage after recovery, and a nickel hydrogen secondary battery using the hydrogen absorbing alloy powder.

## Means for Solving the Problems

In order to achieve the above object, according to the present invention, there is provided a hydrogen absorbing alloy powder according to claim 1 and a nickel hydrogen secondary battery according to claim 3. Preferred embodiments are set forth in the dependent claims.

## Advantageous Effects of the Invention

The hydrogen absorbing alloy powder according to the present invention is an aggregate of particles of a hydrogen absorbing alloy, and the particle size distribution of the particles of the hydrogen absorbing alloy is controlled so as to have a constitution in which when an average particle size of the hydrogen absorbing alloy particles is represented by M; a particle size of 1/2 of the M is represented by P; and a particle size of 1/3 of the M is represented by Q, a content of the particles having a particle size equal to or smaller than the P is lower than 20% by mass of the whole of the hydrogen absorbing alloy powder; and the content of the particles having a particle size equal to or smaller than the Q is lower than 10% by mass of the whole of the hydrogen absorbing alloy powder. By making such a hydrogen absorbing alloy powder to be contained in a negative electrode of a nickel hydrogen secondary battery, even when the battery is used after left standing over a long period of time, and thereafter again charged, the decrease in the operation voltage can be suppressed while the self-discharge is suppressed and the capacity residual rate of the battery is maintained high. Therefore, according to the nickel hydrogen secondary battery of the present invention, since even when the battery is used after left standing over a long period of time and thereafter again charged, the voltage necessary for driving devices can be secured, such a trouble that the battery cannot drive the devices in spite of sufficient capacity of the battery remaining can be suppressed, and the capacity of the battery can be sufficiently utilized. That is, according to the present invention, a nickel hydrogen secondary battery can be provided, in which the decrease in the operation voltage after the recovery is suppressed and which has good usability.

## Brief Description of the Drawing

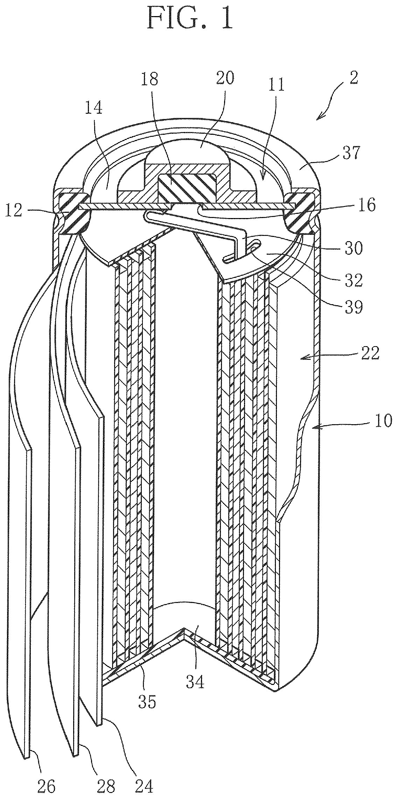

FIG. 1 is a perspective view illustrated by partially rupturing a nickel hydrogen secondary battery according to one embodiment of the present invention.

## Mode for Carrying out the Invention

Hereinafter, the nickel hydrogen secondary battery (hereinafter, referred to simply as battery) according to the present invention will be described with reference to the drawing.

A battery 2 to which the present invention is applied is not especially limited, but the description will be made by taking as an example a case where the present invention is applied to the AA-size cylindrical battery 2 illustrated in FIG. 1.

As illustrated in FIG. 1, the battery 2 has, as a container, an outer can 10 having an opened upper end and a bottomed cylindrical shape. The outer can 10 has conductivity and a bottom wall 35 thereof functions as a negative electrode terminal. A sealing body 11 is fixed to the opening of the outer can 10. The sealing body 11 contains a lid plate 14 and a positive electrode terminal 20, and seals the outer can 10 and provides the positive electrode terminal 20. The lid plate 14 is a disc-shape member having conductivity. The lid plate 14 and a ring-shape insulating packing 12 surrounding the lid plate 14 are disposed in the opening of the outer can 10, and the insulating packing 12 is fixed to an opening edge 37 of the outer can 10 by caulking the opening edge 37 of the outer can 10. That is, the lid plate 14 and the insulating packing 12 hermetically block the opening of the outer can 10 in cooperation with each other.

Here, the lid plate 14 has a center through-hole 16, and a rubber-made valve disc 18 plugging up the center through-hole 16 is disposed on the outer surface of the lid plate 14. Further on the outer surface of the lid plate 14, the metal-made positive electrode terminal 20 which has a cylindrical shape with a flange so as to cover the valve disc 18 is electrically connected. The positive electrode terminal 20 presses the valve disc 18 toward the lid plate 14. Here, the positive electrode terminal 20 has a vent hole opened therein, which is not illustrated in figure.

Usually, the center through-hole 16 is hermetically closed with the valve disc 18. By contrast, when a gas is evolved in the outer can 10 and the internal pressure thereof rises, the valve disc 18 is compressed by the internal pressure to open the center through-hole 16, and consequently, the gas is released from inside the outer can 10 to the outside through the center through-hole 16 and the vent hole of the positive electrode terminal 20. That is, the center through-hole 16, the valve disc 18 and the positive electrode terminal 20 form a safety valve for the battery.

In the outer can 10, electrode groups 22 are accommodated together with an alkaline electrolyte solution (not illustrated in figure). The electrode group 22 is composed of a strip-form positive electrode 24, a strip-form negative electrode 26 and a strip-form separator 28, and the electrode group 22 is wound in a spiral form in the state that the separator 28 is interposed between the positive electrode 24 and the negative electrode 26. That is, the positive electrode 24 and the negative electrode 26 are mutually stacked through the separator 28. The outermost periphery of the electrode groups 22 is formed of a part (outermost peripheral part) of the negative electrode 26, and contacts with the inner peripheral wall of the outer can 10. That is, the negative electrode 26 and the outer can 10 are mutually electrically connected.

Then, in the outer can 10, a positive electrode lead 30 is disposed between the electrode groups 22 and the lid plate 14. In detail, one end of the positive electrode lead 30 is connected to the positive electrodes 24, and the other end thereof is connected to the lid plate 14. Therefore, the positive electrode terminal 20 and the positive electrodes 24 are mutually electrically connected through the positive electrode lead 30 and the lid plate 14. Here, a circular upper insulating member 32 is disposed between the lid plate 14 and the electrode groups 22, and the positive electrode lead 30 extends through a slit 39 installed in the upper insulating member 32. Further, also between the electrode groups 22 and the bottom part of the outer can 10, there is disposed a circular lower insulating member 34.

Further, a predetermined amount of the alkaline electrolyte solution (not illustrated in figure) is injected in the outer can 10. A most part of the injected alkaline electrolyte solution is held in the electrode groups 22, and advances the charge and discharge reaction between the positive electrodes 24 and the negative electrodes 26. As the alkaline electrolyte solution, an alkaline electrolyte solution containing NaOH as a main component of the solute is preferably used. Specifically, a sodium hydroxide aqueous solution is used. In the present invention, the solute of the alkaline electrolyte solution suffices if containing NaOH as a main component, and there suffices also a form in which NaOH is contained singly, or even a form in which in addition to NaOH, for example, at least one of KOH and LiOH is contained. Here, when KOH or LiOH is also contained as a solute of the alkaline electrolyte solution, the amount of NaOH is made to be larger than that of KOH or LiOH. The battery using such an alkaline electrolyte solution containing NaOH as a main component is suppressed in the self-discharge.

As a material of the separator 28, there can be used, for example, a polyamide fiber-made nonwoven fabric imparted with hydrophilic functional groups, and a polyolefin, such as polyethylene or polypropylene, fiber-made nonwoven fabric imparted with hydrophilic functional groups. Specifically, there is preferably used a nonwoven fabric composed of a polyolefin fiber imparted with sulfone groups by a sulfonation treatment. Here, the sulfone group is imparted by treating the nonwoven fabric by using an acid containing a sulfate group, such as sulfuric acid or fuming sulfuric acid. When the sulfonation treatment is thus carried out on the separator, not only the hydrophilicity is imparted, but also there is exhibited an effect of suppressing the self-discharge of the battery.

The positive electrode 24 is composed of a conductive positive electrode base material having a porous structure and having a large number of voids, and a positive electrode mixture held in the voids and on the surface of the positive electrode base material.

As such a positive electrode base material, there can be used, for example, a nickel-plated meshy, spongy or fibrous metal body, or a nickel foam.

The positive electrode mixture contains positive electrode active substance particles, a conductive material, a positive electrode additive and a binder. The binder functions to bind the positive electrode active substance particles, the conductive material and the positive electrode additive, and simultaneously to bind the positive electrode mixture to the positive electrode base material. Here, as the binder, for example, a carboxymethyl cellulose, a methyl cellulose, a PTFE (polytetrafluoroethylene) dispersion, or an HPC (hydroxypropyl cellulose) dispersion can be used.

The positive electrode active substance particle is a nickel hydroxide particle or a high-order nickel hydroxide particle. Here, it is preferable that these nickel hydroxide particles make a solid solution containing at least one of zinc, magnesium and cobalt.

As the conductive material, there can be used, for example, one or two or more selected from cobalt compounds such as cobalt oxide (CoO) and cobalt hydroxide ($Co(OH)_2$), and cobalt (Co). The conductive material is added to the positive electrode mixture according to needs, and the form of the addition may be, besides a form of powder, such that the conductive material is contained in the positive electrode mixture in a form of coating covering the surface of the positive electrode active substance.

As the positive electrode additive, a positive electrode additive suitably selected according to needs is added in order to improve characteristics of the positive electrode. Examples of a chief positive electrode additive include yttrium oxide and zinc oxide.

The positive electrode 24 can be produced, for example, as follows.

First, a positive electrode mixture slurry containing the positive electrode active substance powder composed of the positive electrode active substance particles, the conductive material, the positive electrode additive, water and the binder, which are obtained as described above, is prepared. The obtained positive electrode mixture slurry is filled, for example, in a nickel foam, and dried. After the drying, the nickel foam filled with nickel hydroxide particles and the like is rolled and then cut. The positive electrode 24 holding the positive electrode mixture is thereby fabricated.

Then, the negative electrode 26 will be described.

The negative electrode 26 has a strip-form conductive negative electrode core, and a negative electrode mixture is held on the negative electrode core.

The negative electrode core is composed of a sheet-form metal material having through-holes distributed thereon, and for example, a punching metal sheet can be used. The negative electrode mixture is not only filled in the through-holes of the negative electrode core, but also held in a layer form on both surfaces of the negative electrode core.

The negative electrode mixture contains a hydrogen absorbing alloy powder composed of particles of a hydrogen absorbing alloy, a conductive material and a binder. Then, a negative electrode additive may be added according to needs. Here, the hydrogen absorbing alloy is an alloy capable of absorbing and releasing hydrogen that is a negative electrode active substance. The binder functions to mutually bind the particles of the hydrogen absorbing alloy and the conductive material, and simultaneously to bind the negative electrode mixture to the negative electrode core. Here, as the binder, there can be used a hydrophilic or hydrophobic polymer or the like; and as the conductive material, there can be used carbon black, graphite, nickel powder or the like.

The hydrogen absorbing alloy constituting the hydrogen absorbing alloy powder is not especially limited, but a rare earth metal-Mg-Ni-based hydrogen absorbing alloy containing a rare earth metal, Mg and Ni is preferably used. As the rare earth metal-Mg-Ni-based hydrogen absorbing alloy, specifically, a hydrogen absorbing alloy having a composition represented by the following general formula (I) is used.

$$Ln_{1-x}Mg_xNi_{y-z}T_z \qquad (I)$$

Here, in the general formula (I), Ln is at least one element selected from La, Ce, Pr, Nd, Pm, Sm, Eu, Gd, Tb, Dy, Ho, Er, Tm, Yb, Lu, Ca, Sr, Sc, Y, Ti, Zr and Hf; T is at least one element selected from Mn, Co, V, Nb, Ta, Cr, Mo, Fe, Al, Ga, Zn, Sn, In, Cu, Si, P and B; and the subscripts x, y and z satisfy relations represented by $0 < x < 0.03$, $3.1 \leq y \leq 3.8$ and $0 \leq z \leq 0.50$, respectively.

Further, in the hydrogen absorbing alloy according to the present invention, when elements selected as Ln contain Sm, the proportion of Sm in the components of Ln is preferably made to be 20% by mass or higher.

The value of the subscript y denoting the total value of Ni and Ti preferably satisfies the relation of $3.1 \leq y \leq 3.8$ because in the case of lower than 3.1, the amount of hydrogen absorbed in the hydrogen absorbing alloy is reduced; and in the case of exceeding 3.8, the life characteristics of the battery are deteriorated.

Further, in order to make the cycle life characteristics of the battery good, Al is preferably selected as an element of T in the general formula (I). Here, the value of the subscript z denoting an amount of Al as an element of T is preferably made to be 0.17 or higher. By contrast, since the amount of hydrogen absorbed in the hydrogen absorbing alloy is reduced when the amount of Al becomes too large, the value of z is preferably made to be 0.50 or lower, and more preferably to be 0.30 or lower.

Then, the above-mentioned hydrogen absorbing alloy particles can be obtained, for example, as follows.

First, metal raw materials are weighed so as to make a predetermined composition, and mixed; and the mixture is melted in an inert gas atmosphere, for example, by a high-frequency induction melting furnace, and thereafter cooled to thereby make an ingot. The obtained ingot is subjected to a heat treatment of heating and holding in an inert gas atmosphere at 900 to 1,200°C for 5 to 24 hours. Thereafter, the ingot cooled down to room temperature is mechanically crushed to thereby obtain a hydrogen absorbing alloy powder composed of an aggregate of particles of the hydrogen absorbing alloy. At this time, the condition of a crushing method is so regulated that the particle size distribution of the hydrogen absorbing alloy powder takes the following form. That is, when the average particle size of the particles of the hydrogen absorbing alloy is represented by M; the particle size of 1/2 of the M is represented by P; and the particle size of 1/3 of the M is represented by Q, the content of the hydrogen absorbing alloy particles having a particle size equal to or smaller than the P is made to be lower than 20% by mass of the whole of the hydrogen absorbing alloy powder; and the content of the hydrogen absorbing alloy particles having a particle size equal to or smaller than the Q is made to be lower than 10% by mass of the whole of the hydrogen absorbing alloy powder.

Thus, when the content of the particles having a particle size equal to or smaller than the P of 1/2 of the average particle size M is made to be lower than 20% by mass of the whole of the hydrogen absorbing alloy powder; and the content of the particles having a particle size equal to or smaller than the Q of 1/3 of the average particle size M is made to be lower than 10% by mass of the whole of the hydrogen absorbing alloy powder, the particle size distribution of the hydrogen absorbing alloy powder becomes a particle size distribution in which the amount of the particles having relatively small particle sizes is small. When the hydrogen absorbing alloy powder having a particle size distribution having such a form is used as a negative electrode material, there is suppressed the decrease in the operation voltage after the battery is used after left standing over a long period of time, and again charged and recovered in an obtained battery.

Here, the particle size distribution and the average particle size will be described. First, as the particle size distribution, there is used, for example, a cumulative distribution in terms of mass of a presence proportion of particles having a certain particle size or smaller. Then, when in the cumulative distribution, the particle sizes of the hydrogen absorbing alloy powder are divided into two groups on a certain particle size, a particle size at which the mass of the particles on the larger-diameter side and the mass thereof on the smaller-diameter side become equal, that is, a particle size at which the cumulation of the masses becomes 50% is taken as an average particle size M. Then, in the present invention, the cumulation of the masses of the particles having a particle size equal to or smaller than P of 1/2 of the average particle size M or smaller ones than the P is made to be lower than 20%, that is, the mass of the particles having the particle size equal to or smaller than the P is made to be lower than 20% by mass of the whole of the hydrogen absorbing alloy powder; and the cumulation of the masses of the particles having a particle size equal to or smaller than Q of 1/3 of the average particle size M or smaller ones than the Q is made to be lower than 10%, that is, the mass of the particles having the particle size equal to or smaller than the Q is made to be lower than 10% by mass of the whole of the hydrogen absorbing alloy powder. Then, in the present invention, a cumulation (%) in terms of mass of the particles having a certain particle size or smaller in a cumulation distribution of the hydrogen absorbing alloy powder, and a % by mass of the particles having the certain particle size or smaller to the whole of the hydrogen absorbing alloy powder, indicate the same meaning after all.

Here, as a method for crushing the ingot of the hydrogen absorbing alloy, for example, a crushing method divided into two stages as described below is preferably used. That is, first, the ingot of the hydrogen absorbing alloy is subjected to a first-stage crushing, and a powder composed of particles having particle sizes smaller than a predetermined particle size out of the particles obtained in the first-stage is once taken out outside the system, and stored. Then, the particles having particle sizes larger than the predetermined particle size are subjected to a second-stage crushing. Thereafter, the first-stage powder stored is added to the powder obtained by the second-stage crushing. Further, in the second-stage crushing, the crushing is carried out by being so regulated that the addition of the powder obtained in the first-stage eventually makes a desired particle size distribution. Here, in the first-stage, if the crushing is continued without taking out particles having smaller particle sizes than the predetermined particle size, such particles are crushed more finely, resulting in increasing small-diameter particles. When such small-diameter particles increase, in order to obtain a powder of a desired particle size distribution, the small-diameter particles eventually have to be removed in order to reduce the content of the small-diameter particles, thus increasing the industrial loss of the raw materials. By contrast, in the case of the method of carrying out crushing by dividing the crushing into two stages as described above, the hydrogen absorbing alloy powder making a desired particle size distribution can simply be obtained without generating the industrial loss of the raw materials, which is suitable.

Further, the negative electrode 26 can be produced, for example, as follows.

First, the hydrogen absorbing alloy powder, the conductive material, the binder and water are kneaded to thereby prepare a negative electrode mixture slurry. Here, the negative electrode additive may further be added according to needs. The obtained negative electrode mixture slurry is coated on the negative electrode core, and dried. After the drying, the negative electrode core having the hydrogen absorbing alloy powder and the like adhered thereon is rolled and cut to thereby fabricate the negative electrode 26.

The positive electrode 24 and the negative electrode 26 fabricated as described above are wound in a spiral form in the state that the separator 28 is interposed therebetween to thereby form the electrode group 22.

The electrode group 22 thus obtained is accommodated in the outer can 10. Successively, the alkaline electrolyte solution is injected in a predetermined amount in the outer can 10.

Thereafter, the outer can 10 accommodating the electrode group 22 and the alkaline electrolyte solution is sealed with the lid plate 14 equipped with the positive electrode terminal 20 to thereby obtain the battery 2 according to the present invention. The obtained battery 2 is subjected to an initial activation treatment and made to be in a usable state.

[Examples]

1. Production of a battery

(Example 1)

(1) Fabrication of a positive electrode

Nickel sulfate, zinc sulfate, magnesium sulfate and cobalt sulfate were weighed so as to become, with respect to nickel, 3% by mass of zinc, 0.4% by mass of magnesium and 1% by mass of cobalt; and these were added to a 1 N sodium hydroxide aqueous solution containing ammonium ions to thereby prepare a mixed aqueous solution. While the mixed aqueous solution was being stirred, a 10 N sodium hydroxide aqueous solution was gradually added and allowed to react in the mixed aqueous solution while the pH was being stabilized at 13 to 14 during the reaction to thereby produce base particles composed of nickel hydroxide containing nickel hydroxide as a main component and containing zinc, magnesium and cobalt as a solid solution.

Then, the obtained base particles were charged in an ammonia aqueous solution; and a cobalt sulfate aqueous solution was added and allowed to react therein. During this reaction, the pH was maintained at 9 to 10. By this reaction, there were obtained intermediate particles which have a 0.1 $\mu$m-thick layer of cobalt hydroxide on the surface of the base particles. Further, the intermediate particles were subjected to a heat treatment for 45 min by convecting the intermediate particles in a hot air containing oxygen in an environment of 80°C, and spraying a 12 N sodium hydroxide aqueous solution thereto. Thereby, cobalt hydroxide on the surface of the intermediate particles was converted to a high-conductivity cobalt oxyhydroxide, and sodium was incorporated in the layer of the cobalt oxyhydroxide; thus, there was formed a conductive layer composed of a cobalt compound containing sodium. Thereafter, such intermediate particles having the layer of cobalt oxyhydroxide were filtered, washed with water, and dried at 60°C. There was thus obtained positive electrode active substance particles having the conductive layer composed of cobalt oxyhydroxide containing sodium on the surfaces of the base particles. Here, the base particles in the positive electrode active substance particles were high-order nickel hydroxide particles having an average value of valences of nickel of 2 or higher.

The obtained nickel hydroxide particles were three times washed with pure water in an amount 10 times an amount of the nickel hydroxide particles, and thereafter dewatered and dried.

Then, 1.0 part by mass of a cobalt hydroxide powder was mixed in 100 parts by mass of the positive electrode active substance powder composed of nickel hydroxide particles fabricated as described above; and further, 0.5 part by mass of zinc oxide, 0.5 part by mass of yttrium oxide and 40 parts by mass of an HPC dispersion liquid were mixed to thereby prepare a positive electrode mixture slurry. The positive electrode mixture slurry was filled in a sheet-form nickel foam as a positive electrode base material. The nickel foam holding the positive electrode mixture was dried, and thereafter rolled. The nickel foam holding the positive electrode mixture after the rolling was cut into a predetermined shape. Thereby, a positive electrode 24 for an AA size was obtained.

(2) Fabrication of a hydrogen absorbing alloy and a negative electrode

First, a rare earth component containing 25% by mass of La and 75% by mass of Ce was prepared. The obtained rare earth component, Ni, Co, Mn and Al were weighed to thereby prepare a mixture having proportions represented by the following (II) expression in molar ratio.

The rare earth component: Ni : Co : Mn : Al = 1.00 : 4.00 : 0.50 : 0.25 : 0.25 (II)

The obtain mixture was melted in an argon gas atmosphere by a high-frequency induction melting furnace; the molten metal was cast in a mold, and thereafter cooled down to room temperature to thereby make an ingot of a hydrogen absorbing alloy. Then, the ingot was subjected to a heat treatment. The condition of the heat treatment was heating the ingot in an argon gas atmosphere at a temperature of 1,000°C and holding for 10 hours. Then, after the heat treatment, the ingot of the hydrogen absorbing alloy was cooled down to room temperature (25°C). Here, on a sample collected from the ingot, there was carried out a compositional analysis by a radio-frequency plasma spectroscopy (ICP). As a result, the composition of the hydrogen absorbing alloy was $(La_{0.25}Ce_{0.75})Ni_{4.00}Co_{0.50}Mn_{0.25}Al_{0.25}$. The composition of the obtained hydrogen absorbing alloy is shown in Table 1.

Then, the above-mentioned ingot of the hydrogen absorbing alloy after the heat treatment was mechanically crushed in an argon gas atmosphere to thereby obtain a powder composed of hydrogen absorbing alloy particles. Here, in the present Example, the particle size distribution schemed of the obtained hydrogen absorbing alloy powder was as follows. That is, the schemed particle size distribution was such that when the average particle size M corresponding to 50% in the cumulation in terms of mass was made to be 70 $\mu$m; the particle size P corresponding to 1/2 of M was 35 $\mu$m; and the particle size Q corresponding to 1/3 of M was 23.3 $\mu$m, the cumulation in terms of mass of particles having a particle size equal to or smaller than the P became 14%; and the cumulation in terms of mass of particles having a particle size equal to or smaller than the Q became 4%.

In order to obtain the hydrogen absorbing alloy powder having the particle size distribution as described above, in the present Example, the crushing was carried out under the following condition. First, a first-stage crushing was carried out to thereby obtain a first powder. Small-diameter particles having a particle size of 25 $\mu$m or smaller were extracted from the obtained first powder, and the small-diameter powder composed of the small-diameter particles was accommodated and stored in a predetermined container. Then, on the rest of the first powder, a second-stage crushing was carried out to thereby obtain a second powder. Thereafter, the small-diameter powder having been extracted in the first-stage was mixed with the second powder to thereby obtain the hydrogen absorbing alloy powder. Here, the crushing condition was indicated as a crushing condition 1.

For the hydrogen absorbing alloy powder obtained as described above, the particle size distribution was measured by a laser diffraction scattering-type particle size distribution analyzer (analyzer's name: SRA-150, manufactured by MicrotracBEL Corp.). As a result, the average particle size corresponding to 50% in the cumulation in terms of mass was 70 $\mu$m; the cumulation in terms of mass of the particles having a particle size equal to or smaller than 35 $\mu$m was 14%; and the cumulation in terms of mass of the particles having a particle size equal to or smaller than 23.3 $\mu$m was 4%; it could be thus confirmed that an on-target particle size distribution was obtained. The particle size distribution of the obtained hydrogen absorbing alloy powder is shown in Table 2.

Then, to 100 parts by mass of the obtained hydrogen absorbing alloy powder, 0.4 part by mass of a sodium polyacrylate, 0.1 part by mass of a carboxymethyl cellulose, 2.5 parts by mass of a styrene-butadiene copolymer, 1.0 part by mass of a carbon black and 30 parts by mass of water were added and kneaded to thereby prepare a negative electrode mixture slurry.

The negative electrode mixture slurry was applied uniformly and in a constant thickness on both surfaces of an iron-made perforated plate as a negative electrode core. Here, the perforated plate had a thickness of 45 μm, and was plated with nickel on the surfaces.

After the slurry was dried, the perforated plate holding the negative electrode mixture containing the powder of the hydrogen absorbing alloy and the like was further rolled to raise the amount of the alloy per volume, and was thereafter cut to thereby fabricate a negative electrode 26 for an AA size containing the hydrogen absorbing alloy. Here, the alloy amount per one sheet of the negative electrode was 10.0 g.

(3) Assembly of a nickel hydrogen secondary battery

The obtained positive electrode 24 and negative electrode 26 were wound in a spiral form in the state of the separator 28 being interposed therebetween to thereby fabricate an electrode group 22. The separator 28 used for the fabrication of the electrode group 22 was composed of a polypropylene fiber-made nonwoven fabric having been subjected to a sulfonation treatment, and had a thickness of 0.1 mm (basis weight: 53 $g/m^2$).

On the other hand, there was prepared an alkaline electrolyte solution composed of a 30 mass% sodium hydroxide aqueous solution containing KOH, NaOH and LiOH.

Then, the electrode group 22 was accommodated in a bottomed cylindrical outer can 10, and 2.2 g of the above-mentioned alkaline electrolyte solution was injected. Thereafter, an opening of the outer can 10 was closed with a sealing body 11 to thereby assemble a rated capacity-2,500 mAh AA-size nickel hydrogen secondary battery 2.

(4) Initial activation treatment

The obtained battery 2 was two times subjected to an initial activation treatment in which the battery 2 was charged in an environment of a temperature of 25°C at a current of 0.1C for 16 hours, and thereafter discharged at a current of 0.2C until the battery voltage became 0.5 V. The battery 2 was thus made to be in a usable state.

(Example 2)

A nickel hydrogen secondary battery was fabricated as in Example 1, except for making the composition of the hydrogen absorbing alloy to be $(La_{0.25}Sm_{0.75})_{0.90}Mg_{0.10}Ni_{3.25}Al_{0.25}$.

(Example 3)

A nickel hydrogen secondary battery was fabricated as in Example 1, except for making the composition of the hydrogen absorbing alloy to be $(La_{0.25}Sm_{0.75})_{0.90}Mg_{0.10}Ni_{3.25}Al_{0.25}$, and carrying out the crushing under the following crushing condition 2.

Here, the crushing condition 2 will be described. In the crushing condition 2, first, on the ingot of the hydrogen absorbing alloy, the first-stage crushing was carried out to thereby obtain a first powder. Small-diameter particles having a particle size of 45 μm or smaller were extracted from the obtained first powder, and the small-diameter powder composed of the small-diameter particles was accommodated and stored in a predetermined container. Then, on the rest of the first powder, a second-stage crushing was carried out to thereby obtain a second powder. Thereafter, the small-diameter powder having been extracted in the first-stage was mixed with the second powder to thereby obtain the hydrogen absorbing alloy powder.

(Example 4)

A nickel hydrogen secondary battery was fabricated as in Example 1, except for making the composition of the hydrogen absorbing alloy to be $(La_{0.25}Sm_{0.75})_{0.97}Mg_{0.03}Ni_{3.25}Al_{0.25}$.

(Example 5)

A nickel hydrogen secondary battery was fabricated as in Example 1, except for making the composition of the hydrogen absorbing alloy to be $(La_{0.25}Sm_{0.75})_{0.97}Mg_{0.03}Ni_{3.25}Al_{0.25}$, and carrying out the crushing by employing the crushing condition 2.

(Example 6)

A nickel hydrogen secondary battery was fabricated as in Example 1, except for making the composition of the hydrogen absorbing alloy to be $(La_{0.25}Sm_{0.75})_{0.98}Mg_{0.02}Ni_{3.25}Al_{0.25}$.

(Example 7)

A nickel hydrogen secondary battery was fabricated as in Example 1, except for making the composition of the hydrogen absorbing alloy to be $(La_{0.25}Sm_{0.75})_{0.98}Mg_{0.02}Ni_{3.25}Al_{0.25}$, and carrying out the crushing by employing the crushing condition 2.

(Example 8)

A nickel hydrogen secondary battery was fabricated as in Example 1, except for making the composition of the hydrogen absorbing alloy to be $(La_{0.25}Sm_{0.75})_{0.99}Mg_{0.01}Ni_{3.25}Al_{0.25}$.

(Example 9)

A nickel hydrogen secondary battery was fabricated as in Example 1, except for making the composition of the hydrogen absorbing alloy to be $(La_{0.25}Sm_{0.75})_{0.99}Mg_{0.01}Ni_{3.25}Al_{0.25}$, and carrying out the crushing by employing the crushing condition 2.

(Example 10)

A nickel hydrogen secondary battery was fabricated as in Example 1, except for making the composition of the hydrogen absorbing alloy to be $(La_{0.25}Sm_{0.75})_{0.99}Mg_{0.01}Ni_{3.25}Al_{0.25}$, and making the schemed particle size distribution to be such that when the average particle size M corresponding to 50% in the cumulation in terms of mass was made to be 120 μm; the particle size P corresponding to 1/2 of M was 60 μm; and the particle size Q corresponding to 1/3 of M was 40 μm, the cumulation in terms of mass of particles having a particle size equal to or smaller than the P became 14%; and the cumulation in terms of mass of particles having a particle size equal to or smaller than the Q became 4%, and carrying out the crushing by the following crushing condition 3. Here, the crushing condition 3 will be described. In the crushing condition 3, first, on the ingot of the hydrogen absorbing alloy, the first-stage crushing was carried out to thereby obtain a first powder. Small-diameter particles having a particle size of 60 μm or smaller were extracted from the obtained first powder, and the small-diameter powder composed of the small-diameter particles was accommodated and stored in a predetermined container. Then, on the rest of the first powder, a second-stage crushing was carried out to thereby obtain a second powder. Thereafter, the small-diameter powder having been extracted in the first-stage was mixed with the second powder to thereby obtain the hydrogen absorbing alloy powder.

(Example 11)

A nickel hydrogen secondary battery was fabricated as in Example 1, except for making the composition of the hydrogen absorbing alloy to be $(La_{0.25}Sm_{0.75})_{0.99}Mg_{0.01}Ni_{3.25}Al_{0.25}$, and making the schemed particle size distribution to be such that when the average particle size M corresponding to 50% in the cumulation in terms of mass was specified to be 35 μm; the particle size P corresponding to 1/2 of M was 17.5 μm; and the particle size Q corresponding to 1/3 of M was 11.7 μm, the cumulation in terms of mass of particles having a particle size equal to or smaller than the P became 14%; and the cumulation in terms of mass of particles having a particle size equal to or smaller than the Q became 4%, and carrying out the crushing by the following crushing condition 4. Here, the crushing condition 4 will be described. In the crushing condition 4, first, on the ingot of the hydrogen absorbing alloy, the first-stage crushing was carried out to thereby obtain a first powder. Small-diameter particles having a particle size of 17 μm or smaller were extracted from the obtained first powder, and the small-diameter powder composed of the small-diameter particles was accommodated and stored in a predetermined container. Then, on the rest of the first powder, a second-stage crushing was carried out to thereby obtain a second powder. Thereafter, the small-diameter powder having been extracted in the first-stage was mixed with the second powder to thereby obtain the hydrogen absorbing alloy powder.

(Comparative Example 1)

A nickel hydrogen secondary battery was fabricated as in Example 1, except for making the composition of the hydrogen absorbing alloy to be $(La_{0.25}Ce_{0.75})Ni_{4.00}Co_{0.50}Mn_{0.25}Al_{0.25}$, and making the schemed particle size distribution to be such that when the average particle size M corresponding to 50% in the cumulation in terms of mass was made to be 70 $\mu$m; the particle size P corresponding to 1/2 of M was 35 $\mu$m; and the particle size Q corresponding to 1/3 of M was 23.3 $\mu$m, the cumulation in terms of mass of particles having a particle size equal to or smaller than the P became 20%; and the cumulation in terms of mass of particles having a particle size equal to or smaller than the Q became 10%, and carrying out the crushing by the following crushing condition 5. Here, the crushing condition 5 will be described. In the crushing condition 5, first, on the ingot of the hydrogen absorbing alloy, the first-stage crushing was carried out to thereby obtain a first powder. Small-diameter particles having a particle size of 15 $\mu$m or smaller were extracted from the obtained first powder, and the small-diameter powder composed of the small-diameter particles was accommodated and stored in a predetermined container. Then, on the rest of the first powder, a second-stage crushing was carried out to thereby obtain a second powder. Thereafter, the small-diameter powder having been extracted in the first-stage was mixed with the second powder to thereby obtain the hydrogen absorbing alloy powder.

(Comparative Example 2)

A nickel hydrogen secondary battery was fabricated as in Example 1, except for making the composition of the hydrogen absorbing alloy to be $(La_{0.25}Ce_{0.75})Ni_{4.00}Co_{0.50}Mn_{0.25}Al_{0.25}$, and making the schemed particle size distribution to be such that when the average particle size M corresponding to 50% in the cumulation in terms of mass was made to be 70 $\mu$m; the particle size P corresponding to 1/2 of M was 35 $\mu$m; and the particle size Q corresponding to 1/3 of M was 23.3 $\mu$m, the cumulation in terms of mass of particles having a particle size equal to or smaller than the P became 18%; and the cumulation in terms of mass of particles having a particle size equal to or smaller than the Q became 10%, and carrying out the crushing by the following crushing condition 6. Here, the crushing condition 6 will be described. In the crushing condition 6, first, on the ingot of the hydrogen absorbing alloy, the first-stage crushing was carried out to thereby obtain a first powder. Small-diameter particles having a particle size of 18 $\mu$m or smaller were extracted from the obtained first powder, and the small-diameter powder composed of the small-diameter particles was accommodated and stored in a predetermined container. Then, on the rest of the first powder, a second-stage crushing was carried out to thereby obtain a second powder. Thereafter, the small-diameter powder having been extracted in the first-stage was mixed with the second powder to thereby obtain the hydrogen absorbing alloy powder.

(Comparative Example 3)

A nickel hydrogen secondary battery was fabricated as in Example 1, except for making the composition of the hydrogen absorbing alloy to be $(La_{0.25}Ce_{0.75})Ni_{4.00}Co_{0.50}Mn_{0.25}Al_{0.25}$, and making the schemed particle size distribution to be such that when the average particle size M corresponding to 50% in the cumulation in terms of mass was made to be 70 $\mu$m; the particle size P corresponding to 1/2 of M was 35 $\mu$m; and the particle size Q corresponding to 1/3 of M was 23.3 $\mu$m, the cumulation in terms of mass of particles having a particle size equal to smaller than the P became 20%; and the cumulation in terms of mass of particles having a particle size equal to or smaller than the Q became 8%, and carrying out the crushing by the following crushing condition 7. Here, the crushing condition 7 will be described. In the crushing condition 7, first, on the ingot of the hydrogen absorbing alloy, the first-stage crushing was carried out to thereby obtain a first powder. Small-diameter particles having a particle size of 20 $\mu$m or smaller were extracted from the obtained first powder, and the small-diameter powder composed of the small-diameter particles was accommodated and stored in a predetermined container. Then, on the rest of the first powder, a second-stage crushing was carried out to thereby obtain a second powder. Thereafter, the small-diameter powder having been extracted in the first-stage was mixed with the second powder to thereby obtain the hydrogen absorbing alloy powder.

2. Evaluation of the nickel hydrogen secondary batteries

On the batteries of Examples 1 to 11 and Comparative Examples 1 to 3, which had been all subjected to the initial activation treatment, there was carried out a charge and discharge test by the following procedure.

First, the each battery was put in an environment of 25°C, and charged at a current of 1.0C for 1 hour. Thereafter, the battery was discharged at a current of 1.0C until the battery voltage reached 0.8 V. The voltage (initial operation voltage) at the middle point in the discharge time at this time was measured. Here, with the initial operation voltage of the battery of Comparative Example 1 being taken to be 0 mV as a reference value, a difference from this reference value was determined for the each battery, and the value of the difference was defined as an initial operation voltage D of the each battery. The results are shown in Table 3.

Then, the each battery was put in an environment of 25°C, and charged at a current of 1.0C for 1 hour. Thereafter, the battery was left standing in a thermostatic chamber at 60°C for 1 month. The battery left standing at 60°C for 1 month was taken out from the thermostatic chamber, and discharged in an environment of 25°C at a current of 1.0C until the battery voltage reached 0.8 V. Then, the battery was again charged in an environment of 25°C at a current of 1.0C.

Thereafter, the battery was discharged at a current of 1.0C until the battery voltage reached 0.8 V. The voltage (after-recovery operation voltage) at the middle point in the discharge time at this time was measured. Here, with the initial operation voltage of the battery of Comparative Example 1 being taken to be 0 mV as a reference value, a difference from this reference value was determined for the each battery, and the value of the difference was defined as an after-recovery operation voltage F of the each battery. The results are shown in Table 3.

Further, for the each battery, an amount of decrease in operation voltage after recovery was determined from the following (III) expression. The results thereof are shown in Table 3 as Decreasing Amount of After-Recovery Operation Voltage. It is indicated that a lower value of the amount of decrease in operation voltage after recovery means that the decrease in the operation voltage is more suppressed.

$$\text{Amount of decrease in the after-recovery operation voltage (mV)} = \text{an initial operation voltage } D - \text{an after-recovery operation voltage } F \quad \text{(III)}$$

Further, the each battery was charged in an environment of 25°C at a current of 1.0C for 1 hour, thereafter put in an environment of -10°C, and discharged at a current of 1.0C until the battery voltage became 0.8 V. The discharge capacity of the each battery at this time was measured. Then, with the discharge capacity of the battery of Comparative Example 1 being taken to be 100, the ratio of the discharge capacities of the each battery and the battery of Comparative Example 1 was determined, and the results are shown in Table 3 as Low-Temperature Discharge Characteristic Ratio. It is indicated that the case where the value of the low-temperature discharge characteristic ratio is higher can discharge better even at a low temperature, that is, the low-temperature discharge characteristic is excellent.

[Table 1]

|  | Composition of Hydrogen Absorbing Alloy |
|---|---|
| Example 1 | $(La_{0.25}Ce_{0.75})Ni_{4.00}Co_{0.50}Mn_{0.25}Al_{0.25}$ |
| Example 2 | $(La_{0.25}Sm_{0.75})_{0.90}Mg_{0.10}Ni_{3.25}Al_{0.25}$ |
| Example 3 | $(La_{0.25}Sm_{0.75})_{0.90}Mg_{0.10}Ni_{3.25}Al_{0.25}$ |
| Example 4 | $(La_{0.25}Sm_{0.75})_{0.97}Mg_{0.03}Ni_{3.25}Al_{0.25}$ |
| Example 5 | $(La_{0.25}Sm_{0.75})_{0.97}Mg_{0.03}Ni_{3.25}Al_{0.25}$ |
| Example 6 | $(La_{0.25}Sm_{0.75})_{0.98}Mg_{0.02}Ni_{3.25}Al_{0.25}$ |
| Example 7 | $(La_{0.25}Sm_{0.75})_{0.98}Mg_{0.02}Ni_{3.25}Al_{0.25}$ |
| Example 8 | $(La_{0.25}Sm_{0.75})_{0.99}Mg_{0.01}Ni_{3.25}Al_{0.25}$ |
| Example 9 | $(La_{0.25}Sm_{0.75})_{0.99}Mg_{0.01}Ni_{3.25}Al_{0.25}$ |
| Example 10 | $(La_{0.25}Sm_{0.75})_{0.99}Mg_{0.01}Ni_{3.25}Al_{0.25}$ |
| Example 11 | $(La_{0.25}Sm_{0.75})_{0.99}Mg_{0.01}Ni_{3.25}Al_{0.25}$ |
| Comparative Example 1 | $(La_{0.25}Ce_{0.75})Ni_{4.00}Co_{0.50}Mn_{0.25}Al_{0.25}$ |
| Comparative Example 2 | $(La_{0.25}Ce_{0.75})Ni_{4.00}Co_{0.50}Mn_{0.25}Al_{0.25}$ |
| Comparative Example 3 | $(La_{0.25}Ce_{0.75})Ni_{4.00}Co_{0.50}Mn_{0.25}Al_{0.25}$ |

[Table 2]

|  | Crushing Condition | Particle Size Distribution | | | | | |
|---|---|---|---|---|---|---|---|
|  |  | Average Particle Size M ($\mu$m) | Cumulation of Particles of M or Smaller (%) | Particle Size P=M/2 ($\mu$m) | Cumulative Amount of Particles of P or Smaller (%) | Particle Size Q=M/3 ($\mu$m) | Cumulative Amount of Particles of Q or Smaller (%) |
| Example 1 | 1 | 70 | 50 | 35 | 14 | 23.3 | 4 |

(continued)

| | Crushing Condition | Particle Size Distribution | | | | | |
|---|---|---|---|---|---|---|---|
| | | Average Particle Size M (μm) | Cumulation of Particles of M or Smaller (%) | Particle Size P=M/2 (μm) | Cumulative Amount of Particles of P or Smaller (%) | Particle Size Q=M/3 (μm) | Cumulative Amount of Particles of Q or Smaller (%) |
| Example 2 | 1 | 70 | 50 | 35 | 19 | 23.3 | 9 |
| Example 3 | 2 | 70 | 50 | 35 | 14 | 23.3 | 4 |
| Example 4 | 1 | 70 | 50 | 35 | 18 | 23.3 | 8 |
| Example 5 | 2 | 70 | 50 | 35 | 14 | 23.3 | 4 |
| Example 6 | 1 | 70 | 50 | 35 | 15 | 23.3 | 5 |
| Example 7 | 2 | 70 | 50 | 35 | 14 | 23.3 | 4 |
| Example 8 | 1 | 70 | 50 | 35 | 14 | 23.3 | 4 |
| Example 9 | 2 | 70 | 50 | 35 | 14 | 23.3 | 4 |
| Example 10 | 3 | 120 | 50 | 60 | 14 | 40 | 4 |
| Example 11 | 4 | 35 | 50 | 17.5 | 14 | 11.7 | 4 |
| Comparative Example 1 | 5 | 70 | 50 | 35 | 20 | 23.3 | 10 |
| Comparative Example 2 | 6 | 70 | 50 | 35 | 18 | 23.3 | 10 |
| Comparative Example 3 | 7 | 70 | 50 | 35 | 20 | 23.3 | 8 |

[Table 3]

| | Initial Operation Voltage (mV) | After-Recovery Operation Voltage (mV) | Amount of Decrease in Operation Voltage after Recovery (mV) | Low-Temperature Discharge Characteristic |
|---|---|---|---|---|
| Example 1 | 0 | -18 | 18 | 8 0 |
| Example 2 | -1 | -21 | 20 | 150 |
| Example 3 | -1 | -18 | 17 | 140 |
| Example 4 | -3 | -22 | 19 | 148 |
| Example 5 | -3 | -19 | 16 | 141 |
| Example 6 | -4 | -15 | 11 | 145 |
| Example 7 | -4 | -14 | 10 | 144 |
| Example 8 | -4 | -15 | 11 | 144 |
| Example 9 | -4 | -15 | 11 | 144 |
| Example 10 | -4 | -14 | 10 | 110 |
| Example 11 | -4 | -16 | 12 | 223 |
| Comparative Example 1 | 0 | -30 | 30 | 100 |
| Comparative Example 2 | 0 | -29 | 29 | 95 |

(continued)

|  | Initial Operation Voltage (mV) | After-Recovery Operation Voltage (mV) | Amount of Decrease in Operation Voltage after Recovery (mV) | Low-Temperature Discharge Characteristic |
|---|---|---|---|---|
| Comparative Example 3 | 0 | -29 | 29 | 95 |

3. Consideration

(1) In the forms of the particle size distributions of the hydrogen absorbing alloy powders, Comparative Example 1 contained more particles having a particle size equal to or smaller than P and more particles having a particle size equal to or smaller than Q than Example 1 contained. In such Comparative Example 1, the amount of decrease in operation voltage after recovery was large and the operation voltage of the battery after the recovery largely decreased.

(2) By contrast, it is clear that in Example 1 in which the cumulation of particles having a particle size equal to smaller than P was 14%, and the cumulation of particles having a particle size equal to or smaller than Q was 8%, the amount of decrease in operation voltage after recovery was more suppressed than in Comparative Example 1.

(3) From the results of Example 2 and Example 3, Example 4 and Example 5, Example 6 and Example 7, and Example 8 and Example 9, it is clear that a smaller amount of Mg contained in the hydrogen absorbing alloy more easily gave a desired particle size distribution. Particularly when Mg was less than 0.03, it was easy for a desired particle size distribution to be attained. This is conceivably because since the case of a smaller amount of Mg gave a higher hardness of the hydrogen absorbing alloy, it was suppressed that particles of such an alloy was more finely crushed than needed in the second-stage crushing, and therefore, since the amount of small-diameter particles did not largely increase, the powder having the on-target particle size distribution could be obtained.

(4) The following becomes clear from the results of Examples 9, 10 and 11. Examples 9, 10 and 11, though having the same particle size distribution of the hydrogen absorbing alloy powders, had different absolute values of the particle sizes of the hydrogen absorbing alloy particles. The amounts of decrease in operation voltages after recovery in these Examples 9, 10 and 11 were 10 to 12 mV, nearly the same, and the decreases of the after-recovery operation voltages were sufficiently suppressed. It is clear from this that a suppressing effect of the after-recovery operation voltage was little affected by the absolute value of the particle size of the hydrogen absorbing alloy particles, and was affected by the relative form of the particle size distribution of the hydrogen absorbing alloy powder, which is important. When the particle size of the hydrogen absorbing alloy particles was too large, however, there increased such a risk that the hydrogen absorbing alloy particles break through the separator and cause short-circuit; conversely, when the particle size of the hydrogen absorbing alloy particles was too small, there increased such a risk that the corrosion of the hydrogen absorbing alloy easily progressed and the life characteristics of the battery was reduced.

(5) The following becomes clear from the results of Example 1 and Comparative Examples 1, 2 and 3. In the particle size distributions of the hydrogen absorbing alloy powders, Comparative Examples 1, 2 and 3, which did not meet one of or both of the requirement that the cumulation of particles having a particle size equal to or smaller than P was lower than 20% and the requirement that the cumulation of particles having a particle size equal to or smaller than Q was lower than 10%, exhibited larger amounts of decrease in operation voltages after recovery than in Example 1, which met both the requirements. It becomes clear from this that in order to suppress the decrease of the after-recovery operation voltage, it is needed to meet both of the requirement that the cumulation of particles having a particle size equal to or smaller than P is lower than 20% and the requirement that the cumulation of particles having a particle size equal to or smaller than Q is lower than 10%.

(6) When the content of the hydrogen absorbing alloy particles having small particle sizes decreased, since the surface area of the hydrogen absorbing alloy being a reaction area was reduced, the low-temperature discharge characteristic of the batteries decreased. This was remarkable in the cases of using rare earth metal-Ni-based hydrogen absorbing alloys, and is clear from the result that in Example 1, although the decrease in the after-recovery operation voltage was suppressed, the low-temperature discharge characteristic was not much improved. Although it is effective that by thus regulating the particle size distribution in order to suppress the decrease in the after-recovery operation voltage, the cumulation of particles having a particle size equal to or smaller than P is made to be lower than 20%, and the cumulation of particles having a particle size equal to or smaller than Q is made to be lower than 10%, the use of the rare earth metal-Mg-Ni-based hydrogen absorbing alloys as the hydrogen absorbing alloy is effective in order to suppress the adverse effect of the decrease in the low-temperature discharge characteristic due to the regulation. This is clear from that in Examples 2 to 11 using the rare earth metal-Mg-Ni-based hydrogen absorbing alloys, the decrease in the after-recovery operation voltage was suppressed and simultaneously, the low-temperature discharge characteristic was improved.

(7) In the present invention, by a technical idea of regulating the particle size distribution of the hydrogen absorbing alloy powder, that is, by the technical idea of making such a particle size distribution that when the average particle size of the particles is represented by M; the particle size of 1/2 of the M is represented by P; and the particle size of 1/3 of the M is represented by Q, the content of the particles having a particle size equal to or smaller than the P is lower than 20% by mass of the whole of the hydrogen absorbing alloy powder; and the content of the particles having a particle size equal to or smaller than the Q is lower than 10% by mass of the whole of the hydrogen absorbing alloy powder, there can be provided a nickel hydrogen secondary battery suppressed in the decrease in the operation voltage even after recovery after a long-period standing, and the industrial value thereof is remarkably high.

## Explanation of Reference Signs

2      NICKEL HYDROGEN SECONDARY BATTERY
10    OUTER CAN
22    ELECTRODE GROUP
24    POSITIVE ELECTRODE
26    NEGATIVE ELECTRODE
28    SEPARATOR

## Claims

1. A hydrogen absorbing alloy powder that is contained in a negative electrode of a nickel hydrogen secondary battery and an aggregate of particles of a hydrogen absorbing alloy,
wherein the hydrogen absorbing alloy has a composition represented by the general formula: $Ln_{1-x}Mg_xNi_{y-z}T_z$, wherein Ln is at least one element selected from La, Ce, Pr, Nd, Pm, Sm, Eu, Gd, Tb, Dy, Ho, Er, Tm, Yb, Lu, Ca, Sr, Sc, Y, Ti, Zr and Hf; T is at least one element selected from Mn, Co, V, Nb, Ta, Cr, Mo, Fe, Al, Ga, Zn, Sn, In, Cu, Si, P and B; and the subscripts x, y and z satisfy relations represented by $0 < x < 0.03$, $3.1 \leq y \leq 3.8$ and $0 \leq z \leq 0.50$, respectively, and
wherein when an average particle size of the particles is represented by M; a particle size of 1/2 of the M is represented by P; and a particle size of 1/3 of the M is represented by Q, a content of the particles having a particle size equal to or smaller than the P is lower than 20% by mass of the whole of the hydrogen absorbing alloy powder; and a content of the particles having a particle size equal to or smaller than the Q is lower than 10% by mass of the whole of the hydrogen absorbing alloy powder.

2. The hydrogen absorbing alloy powder according to claim 1, wherein a proportion of Sm in components of the Ln is 20% by mass or higher.

3. A nickel hydrogen secondary battery, comprising: a container; and an electrode group accommodated in a hermetically sealed state together with an alkaline electrolyte solution in the container,
wherein the electrode group comprises a positive electrode and a negative electrode stacked through a separator,
wherein the negative electrode comprises a hydrogen absorbing alloy powder according to any one of claims 1 or 2.

## Patentansprüche

1. Wasserstoffabsorbierendes Legierungspulver, das in einer negativen Elektrode einer Nickel-Wasserstoff-Sekundärbatterie und einem Aggregat von Teilchen einer wasserstoffabsorbierenden Legierung enthalten ist,
wobei die wasserstoffabsorbierende Legierung eine Zusammensetzung aufweist, die durch die allgemeine Formel ausgedrückt wird: $Ln_{1-x}Mg_xNi_{y-z}T_z$, wobei Ln mindestens ein Element ist, ausgewählt aus La, Ce, Pr, Nd, Pm, Sm, Eu, Gd, Tb, Dy, Ho, Er, Tm, Yb, Lu, Ca, Sr, Sc, Y, Ti, Zr und Hf; T mindestens ein Element ist, ausgewählt aus Mn, Co, V, Nb, Ta, Cr, Mo, Fe, Al, Ga, Zn, Sn, In, Cu, Si, P und B; und die Indizes x, y und z Beziehungen erfüllen, die durch 0 < x < 0,03, 3,1 ≤ y ≤ 3,8 und 0 ≤ z ≤ 0,50 ausgedrückt werden, und
wobei - wenn eine mittlere Teilchengröße der Teilchen durch M ausgedrückt wird; eine Teilchengröße von 1/2 M durch P ausgedrückt wird; und eine Teilchengröße von 1/3 M durch Q ausgedrückt wird - ein Gehalt der Teilchen mit einer Teilchengröße, die gleich oder kleiner als P ist, kleiner als 20 Massen-% des gesamten wasserstoffabsorbierenden Legierungspulvers ist; und ein Gehalt der Teilchen mit einer Teilchengröße, die gleich oder kleiner als Q ist, kleiner als 10 Massen-% des gesamten wasserstoffabsorbierenden Legierungspulvers ist.

2. Wasserstoffabsorbierendes Legierungspulver nach Anspruch 1, worin ein Anteil von Sm in Komponenten des Ln 20 Masse-% oder mehr beträgt.

3. Nickel-Wasserstoff-Sekundärbatterie, umfassend: einen Behälter; und eine Elektrodengruppe, die in einem hermetisch abgeschlossenen Zustand zusammen mit einer alkalischen Elektrolytlösung in dem Behälter untergebracht ist, wobei die Elektrodengruppe eine positive Elektrode und eine negative Elektrode umfasst, die mittels eines Separators gestapelt sind, wobei die negative Elektrode ein wasserstoffabsorbierendes Legierungspulver nach einem beliebigen der Ansprüche 1 oder 2 umfasst.


**Revendications**

1. Poudre d'alliage absorbeur d'hydrogène qui est contenue dans une électrode négative d'une batterie secondaire au nickel-hydrogène et un agrégat de particules d'un alliage absorbeur d'hydrogène, dans laquelle l'alliage absorbeur d'hydrogène a une composition représentée par la formule générale : $Ln_{1-x}Mg_x$-$Ni_{y-z}T_z$, où Ln est au moins un élément sélectionné parmi La, Ce, Pr, Nd, Pm, Sm, Eu, Gd, Tb, Dy, Ho, Er, Tm, Yb, Lu, Ca, Sr, Sc, Y, Ti, Zr et Hf ; T est au moins un élément sélectionné parmi Mn, Co, V, Nb, Ta, Cr, Mo, Fe, Al, Ga, Zn, Sn, In, Cu, Si, P et B ; et les indices inférieurs x, y et z satisfont aux relations représentées par 0 < x < 0,03, 3,1 ≤ y ≤ 3,8 et 0 ≤ z ≤ 0,50, respectivement, et dans laquelle lorsqu'une taille de particule moyenne des particules est représentée par M ; une taille de particule de 1/2 de M est représentée par P ; et une taille de particule de 1/3 de M est représentée par Q, une teneur en particules ayant une taille de particule égale ou inférieure à P est inférieure à 20% en masse de la totalité de la poudre d'alliage absorbeur d'hydrogène ; et une teneur en particules ayant une taille de particule égale ou inférieure à Q est inférieure à 10% en masse de la totalité de la poudre d'alliage absorbeur d'hydrogène.

2. Poudre d'alliage absorbeur d'hydrogène selon la revendication 1, dans laquelle une proportion de Sm dans les composants du Ln est de 20% en masse ou plus.

3. Batterie secondaire au nickel-hydrogène, comprenant : un récipient ; et un groupe d'électrodes logé dans un état hermétiquement scellé avec une solution électrolytique alcaline dans le récipient, dans laquelle le groupe d'électrodes comprend une électrode positive et une électrode négative empilées à travers un séparateur, dans laquelle l'électrode négative comprend une poudre d'alliage absorbeur d'hydrogène selon l'une quelconque des revendications 1 ou 2.

FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 62115657 A
- EP 2690690 A1